(19) **Europäisches Patentamt**
**European Patent Office**
**Office européen des brevets**

(11) **EP 4 141 751 A1**

(12) **EUROPEAN PATENT APPLICATION**

(43) Date of publication:
**01.03.2023 Bulletin 2023/09**

(51) International Patent Classification (IPC):
**G06N 10/20** *(2022.01)*          **G06N 10/70** *(2022.01)*

(21) Application number: **22186921.7**

(52) Cooperative Patent Classification (CPC):
**G06N 10/70; G06N 10/20**

(22) Date of filing: **26.07.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.08.2021 US 202117461664**

(71) Applicant: **FUJITSU LIMITED**
**Kawasaki-shi, Kanagawa 211-8588 (JP)**

(72) Inventor: **UPADHYAY, Sarvagya**
**San Jose, California 95134 (US)**

(74) Representative: **Hoffmann Eitle**
**Patent- und Rechtsanwälte PartmbB**
**Arabellastraße 30**
**81925 München (DE)**

(54) **ERROR MITIGATION FOR SAMPLING ON QUANTUM DEVICES**

(57)     A method may include obtaining a plurality of first data distributions in which each data distribution corresponds to running a first quantum circuit using a first input at a different noise level of a plurality of noise levels. The method may include simulating the first quantum circuit as a classical circuit and obtaining a noiseless data distribution corresponding to running the classical circuit using the first input. The method may also include determining an error mitigation parameter by performing a data regression analysis between the noiseless data distribution and the plurality of first data distributions. The method may additionally include obtaining a second data distribution that corresponds to running a second quantum circuit using a second input. A modified second data distribution may be obtained by applying the error mitigation parameter to the second data distribution such that noise included in the second data distribution is removed.

FIG. 1

**Description**

The present disclosure generally relates to error mitigation for sampling on quantum devices.

**BACKGROUND**

Quantum computers may use quantum bits ("qubits") capable of representing information as ones, zeroes, or ones and zeroes simultaneously. Quantum computers may perform some types of computations, such as optimization problems, integer factorization, simulation modeling, and/or data analysis, more efficiently and/or more accurately than classical computing systems. However, existing quantum computers may be classified as noisy intermediate-scale quantum (NISQ) devices because the existing quantum computers only include a limited numbers of qubits and are consequently typically unable or unsuitable to perform computationally demanding tasks.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

**SUMMARY**

According to an aspect of an embodiment, a method may include obtaining a plurality of first data distributions in which each first data distribution corresponds to running a first quantum circuit using a first input at a different noise level of a plurality of noise levels. The method may include simulating the first quantum circuit as a classical circuit, running the classical circuit using the first input, and obtaining a noiseless data distribution corresponding to running the classical circuit using the first input. The method may also include determining an error-mitigation parameter by performing a data regression analysis between the noiseless data distribution and the plurality of first data distributions. The method may additionally include obtaining a second data distribution that corresponds to running a second quantum circuit using a second input. A modified second data distribution may be obtained by applying the error mitigation parameter to the second data distribution such that noise included in the second data distribution is removed.

The object and advantages of the embodiments will be realized and achieved at least by the elements, features, and combinations particularly pointed out in the claims. It is to be understood that both the foregoing general description and the following detailed description are explanatory and are not restrictive of the invention, as claimed.

**BRIEF DESCRIPTION OF THE DRAWINGS**

Example embodiments will be described and explained with additional specificity and detail through the accompanying drawings in which:

Figure 1 is a diagram representing an example embodiment of a system for determining and applying an error mitigation parameter to a data distribution according to the present disclosure;
Figure 2 illustrates a noise-adjustment process for a quantum circuit according to the present disclosure;
Figure 3 is a flowchart of an example method of determining and applying the error mitigation parameter to a data distribution according to the present disclosure; and
Figure 4 is an example computing system.

**DETAILED DESCRIPTION**

Noisy intermediate-scale quantum (NISQ) devices may include a quantum circuit that includes one or more quantum logic gates ("quantum gates"). A given NISQ device may include an overall error rate corresponding to the gate-level error rates incurred by each of the quantum gates included in the quantum circuit of the given NISQ device. Using the given NISQ device to solve practical computing problems may be limited by the gate-level error rate of the quantum gates included in the given NISQ device and the corresponding overall error rate of the given NISQ device.

Including a greater number of quantum gates may improve the computing capabilities of a given NISQ device. However, increasing the number of quantum gates may also increase the noise level of results output by the given NISQ device due to the increased overall error rate. Because NISQ devices may only include a limited number of qubits on which quantum gates may perform operations, there may be little to no capacity for allocating qubits for performance of errorcorrection and/or fault-tolerance operations.

The present disclosure may relate to, among other things, a system and method of reducing the noise of one or more data distributions output by NISQ devices. In some embodiments, reducing the noise of the data distributions output by NISQ devices may include determining an error mitigation parameter by comparing one or more noisy data distributions output by a given NISQ device that runs, using a given input, at multiple different noise levels with a noiseless data distribution output by running a classical circuit using the same given input that simulates the given NISQ device.

In some embodiments, the error mitigation parameter may be applied to operations of the given NISQ device using a different input and/or other NISQ devices of similar quantum-circuitry depth to remove noise in the data distributions output by the NISQ devices. These and other embodiments of the present disclosure may provide improvements over previous iterations of quantum computing systems by reducing the noise level associated with computing data distributions on the quantum computing systems and thus providing more accurate and/or higher confidence computing results.

Embodiments of the present disclosure are explained with reference to the accompanying figures.

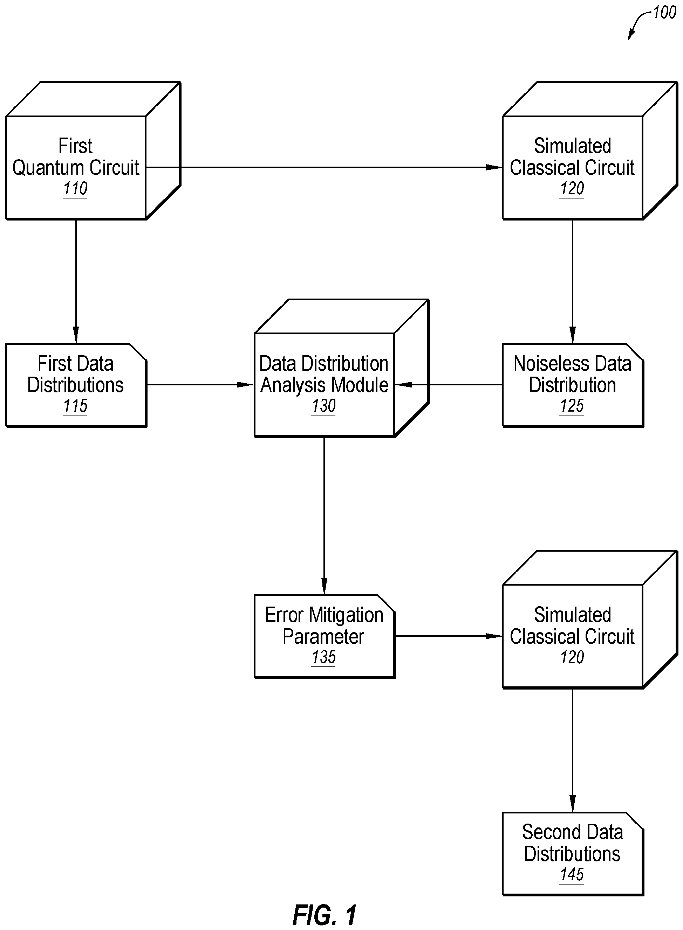

Figure 1 is a diagram representing an example embodiment of a system 100 for determining and applying an error mitigation parameter to a data distribution according to the present disclosure. In some embodiments, the system 100 may include a first quantum circuit 110, a simulated classical circuit 120, a data distribution analysis module 130, and/or a second quantum circuit 140. The first quantum circuit 110 may output one or more first data distributions 115, and the simulated classical circuit 120 may output a noiseless data distribution 125. The data distribution analysis module 130 may obtain the first data distributions 115 and the noiseless data distribution 125 and determine an error mitigation parameter 135. The second quantum circuit 140 may apply the error mitigation parameter 135 to determine a second data distribution 145 corresponding to operation of the second quantum circuit 140.

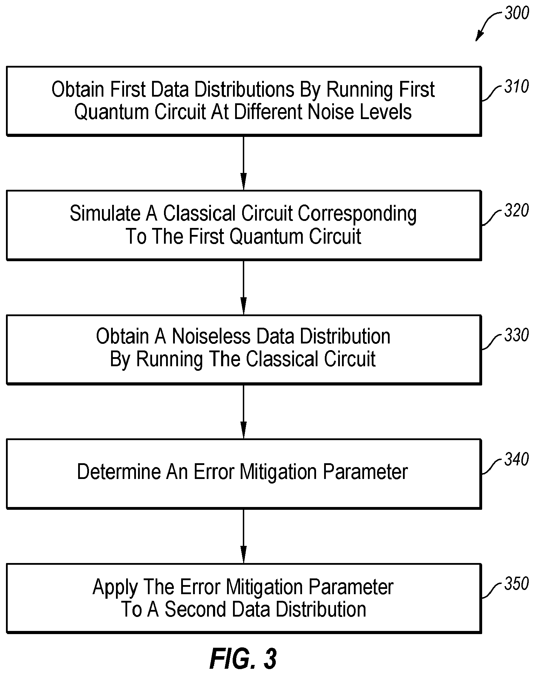

Elements of the system 100, including, for example, the first quantum circuit 110, the simulated classical circuit 120, the data distribution analysis module 130, and/or the second quantum circuit 140 (generally referred to as "computing modules"), may include code and routines configured to enable a computing system to perform one or more operations. Additionally or alternatively, the computing modules may be implemented using hardware including a processor, a microprocessor (e.g., to perform or control performance of one or more operations), a field-programmable gate array (FPGA), or an application-specific integrated circuit (ASIC). In some other instances, the computing modules may be implemented using a combination of hardware and software. In the present disclosure, operations described as being performed by the computing modules may include operations that the computing modules may direct one or more corresponding systems to perform. The computing modules may be configured to perform a series of operations with respect to the first data distributions 115, the noiseless data distribution 125, the error mitigation parameter 135, and/or the second data distributions 145 as described in further detail below in relation to method 300 of Figure 3.

The first quantum circuit 110 may include one or more quantum gates in which each of the quantum gates may be configured to perform one or more operations on qubits associated with the first quantum circuit 110 and generate a particular output corresponding to a particular input. Similar to classical computing bits, a qubit may have a value of "1" or a value of "0". Further, a qubit may include a superposition state in which the qubit simultaneously represents a value of 1 and 0 rather than only a value of either 1 or 0 as with classical bits. Because of the superposition state of the qubit, a quantum gate may include a logical representation of a logic gate configured for reversible computations in which each input obtained by the quantum gate maps to a unique output. A reversible computing system including such quantum gates capable of reversible computations may reduce the power consumption and/or prevent overheating of the reversible computing system, which may affect an increase in computational speed because operations of the reversible computing system may not be limited by overheating and/or other power consumption considerations. As such, the quantum gates of the first quantum circuit 110 may function similarly to logic gates included in classical computing systems but with more robust and/or more efficient computing capabilities.

In some embodiments, the first quantum circuit 110 may be configured to obtain a given input (e.g., one or more parameters, values, data points, and/or any other types of information), apply one or more operations to the given input, and output one or more data points that may be arranged as a discrete and finite data distribution (e.g., a Binomial distribution, a Bernoulli distribution, etc.) based on the operations applied to the given input. In these and other embodiments, data may be sampled from the first data distributions 115 outputted by the first quantum circuit 110 for applications such as Monte Carlo simulations, inferential statistics analysis, computational randomness generation, etc.

In some embodiments, the first data distribution 115 may include some amount of data that represents corrupted data, statistical fluctuations, and/or any other types of random noise that are unrelated to the data points included in the first data distribution 115 because the first quantum circuit 110 may or may not include error-correcting and/or fault-tolerance processes. As such, the first data distribution 115 output by the first quantum circuit 110 may be considered a noisy data distribution outputted at a particular noise level.

In some embodiments, the noise level of the first data distribution 115 may be modified by adjusting the quantum gates included in the first quantum circuit 110. For example, adjusting the quantum gates may include replacing one or more of the quantum gates with different quantum gates and/or inserting one or more pairs of quantum gates in the first quantum circuit 110. Because each quantum gate may include a baseline noise level, increasing the number of quantum gates included in the first quantum circuit 110 may increase the noise level of the first data distributions 115 output by the first quantum circuit 110 such that the first quantum circuit 110 may be run at multiple noise levels to output the first data distributions 115 with varying amounts of noise. However, arbitrarily increasing the number of quantum gates included in a given quantum circuit may alter the operations performed by the given quantum circuit and consequently change the output of the given quantum circuit beyond changing the noise level of the outputted data distributions.

To prevent changing the output of a quantum circuit in response to increasing the number of quantum gates included in the quantum circuit, the quantum gates introduced to the quantum circuit may include one or more quantum gates included in a Clifford group. In some embodiments, the Clifford group may include quantum gates that can be simulated as classical logic gates, such as Hadamard gates, controlled-NOT (CNOT) gates, and/or phase (S) gates. The Hadamard gates, CNOT gates, and/or S gates included in the Clifford group may be inserted into and/or used to replace other quantum gates included in the first quantum circuit 110. Simultaneous application of a pair of Hadamard gates, a pair of CNOT gates, and/or two pairs of S gates to the same single-qubit gate and/or the same two-qubit gate may be equivalent to performing an identity operation for a quantum circuit in which application of the identity operation to a particular input returns an output that is the same as the particular input. In other words, inserting a pair of Hadamard gates, a pair of CNOT gates, and/or two pairs of S gates may effectively cancel out the operations of each of the inserted gates. As such, the first data distribution 115 output by the first quantum circuit 110 may or may not be changed in response to the above-noted gates being inserted into the first quantum circuit 110.

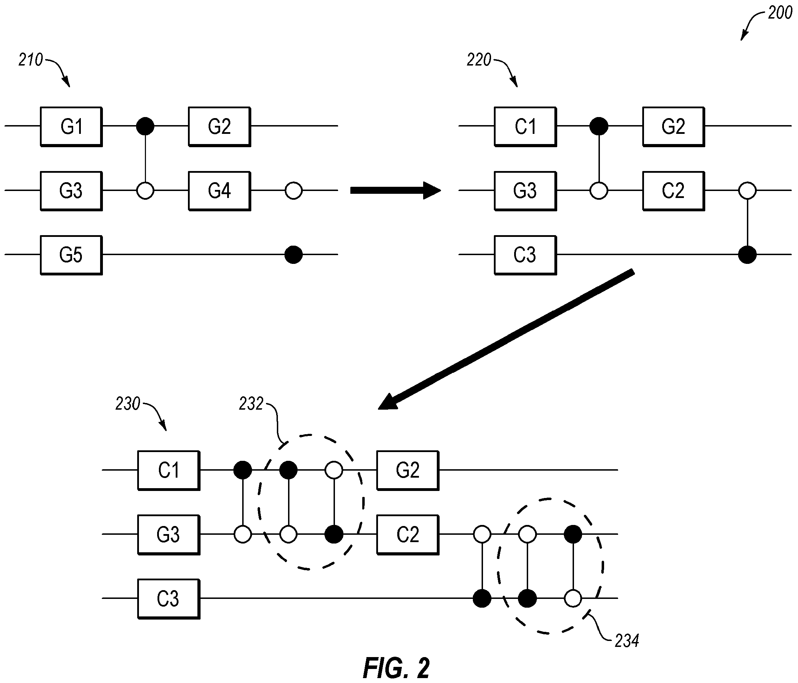

Figure 2 illustrates a noise-adjustment process for a quantum circuit 200 according to at least one embodiment of the present disclosure. The quantum circuit 200 may include one or more single-qubit quantum gates represented by quantum gates $G_1$ through $G_5$. A substitute quantum circuit 210 may include a circuit configuration similar to the quantum circuit 200 but with one or more of the quantum gates $G_1$-$G_5$ replaced by a corresponding quantum gate included in the Clifford group. For example, quantum gate $G_1$ may be replaced by a first quantum gate included in the Clifford group $C_1$ (e.g., any of the above-noted gates), quantum gate $G_4$ may be replaced by a second quantum gate included in the Clifford group $C_2$, and quantum gate $G_5$ may be replaced by a third quantum gate included in the Clifford group $C_3$ as illustrated in Figure 2.

In some embodiments, a second substitute quantum circuit 220 may be outputted by inserting one or more pairs of Hadamard gates, one or more pairs of CNOT gates, two or more pairs of S phase gates, and/or any other quantum gates capable of affecting the identity operation to the substitute quantum circuit 210. For example as illustrated in Figure 2, two pairs of Hadamard gates, CNOT gates, and/or S gates 232 and 234 are inserted into the substitute quantum circuit 210 to generate the second substitute quantum circuit 220. Because each pair of Hadamard gates or CNOT gates and/or each two pairs of S gates 232 and 234 is equivalent to performing the identity operation, the operations of the substitute quantum circuit 210 and the second substitute quantum circuit 220 may output the same or similar results for any given input with variations in the noise level of the outputted results. As such, multiple first data distributions 115 in which each of the first data distributions 115 includes a different noise level may be outputted by the first quantum circuit 110 for a given input by adjusting the noise level of the first quantum circuit 110 as described in Figure 2.

In some embodiments, the second substitute quantum circuit 220 may include one or more quantum gates, and the number of quantum gates included in the second substitute quantum circuit 220 may represent a circuitry depth of the second substitute quantum circuit 220. In these and other embodiments, application of the error mitigation parameter 135 to another quantum circuit (e.g., a quantum circuit of interest with respect to a given application) having a similar circuitry depth as the second substitute quantum circuit 220 may result in more accurate data distribution outputs because the second substitute quantum circuit 220 and the other quantum circuit having similar circuitry depth may output the same or similar levels of noise. For example, an error mitigation parameter determined based on analysis of data distributions outputted by the second substitute quantum circuit 220 as illustrated in Figure 2 may be particularly effective at reducing the noise level of a data distribution outputted by a quantum circuit including approximately six quantum gates.

Additionally or alternatively, the quantum gates of the quantum circuit 200, the substitute quantum circuit 210, and/or the second substitute quantum circuit 220 may be configured to simulate a quantum circuit of interest with respect to a particular application. In other words, the configuration of the quantum gates of the quantum circuit 200 may be ordered, connected, or otherwise configured such that the quantum circuit 200 includes the same or a similar configuration of quantum gates as the quantum circuit of interest. In these and other embodiments, configuring the quantum circuit 200, the substitute quantum circuit 210, and/or the second substitute quantum circuit 220 to simulate the quantum circuit of interest may facilitate calculating an error mitigation parameter that is tailored to reducing the noise of data distributions output by the quantum circuit of interest. In some embodiments, however, configuring the quantum circuit 200, the substitute quantum circuit 210, and/or the second substitute quantum circuit 220 to simulate the quantum circuit of interest may take a longer time than simulating a quantum circuit having the same or a similar circuitry depth as the quantum circuit of interest. As such, the configuration decision to simulate the quantum circuit of interest or a quantum circuit of similar circuitry depth may include a trade-off between speed and general applicability versus error mitigation effectiveness.

Returning to description of the system 100 of Figure 1, the Hadamard gates, CNOT gates, and/or S gates may be capable of increasing fault tolerance of a quantum circuit that implements the quantum gates included in the Clifford group by distilling multiple noisier quantum states into a smaller number of more reliable quantum states. According to the Gottesman-Knill theorem, implementation of the above-noted gates may facilitate simulation of the first quantum circuit 110 as a classical circuit, such as the simulated classical circuit 120, by simulating the quantum gates in polynomial time as classical logic gates on classical computing systems. Determining a data distribution by the simulated classical circuit 120 may result in outputting the noiseless data distribution 125 because performing computational operations using classical circuits typically results in little to no noise in the output.

A data distribution analysis module 130 may obtain the first data distributions 115 output by the first quantum circuits and the noiseless data distribution 125 output by the simulated classical circuit 120 and determine the error mitigation parameter 135 based on a data-regression analysis of the obtained data distributions and their corresponding noise levels. In some embodiments, the data distribution analysis module 130 may represent the first data distributions 115 as one or more vectors and/or matrices. For example, each of the first data distributions 115 over $k$ outcomes may be represented as a collection $q_i$ of individual probabilities as shown in Equation (1) below:

$$q_i = (q_i(1), q_i(2), \ldots, q_i(k)) \qquad (1)$$

in which each element of the collection $q_i$ represents one of the individual probabilities. Additionally or alternatively, the noiseless data distribution 125 over the same $k$ outcomes may be represented as a collection $p$ as shown in Equation (2) below:

$$p = (p(1), p(2), \ldots, p(k)) \qquad (2)$$

Additionally or alternatively, a noise level associated with each respective first data distribution 115 may be denoted by an index $i$ such that a vector and/or matrix may represent the collections $q_i$ such that the first data distributions 115 corresponding to a number of noise levels $n$ may be represented by the vector and/or matrix shown in Equation (3) below:

$$(q_0, q_1, \ldots, q_n) \qquad (3)$$

In some embodiments, the error mitigation parameter 135 may be determined based on optimizing a mapping matrix $A$ that facilitates comparison between a first data distribution and a second data distribution by mapping a relationship between the two data distributions. The mapping matrix $A$ may preserve a probability distribution such that a vector product obtained by multiplying the mapping matrix $A$ and a data distribution (e.g., any of the first data distributions 115 and/or the noiseless data distribution 125) is still a probability distribution. In these and other embodiments, the mapping matrix $A$ may include row stochastic properties to facilitate preservation of the probability distribution. For example, all of the elements of the mapping matrix $A$ may be non-negative numbers, and/or a sum of all of the elements in a particular row of the mapping matrix $A$ may equal one.

In some embodiments, the error mitigation parameter 135 may be determined by identifying a mapping matrix $A$ that minimizes a difference between each of the first data distributions 115 and the noiseless data distribution 125 according to the following convex objective function:

$$\sum_{i=0}^{n} ||Aq_i - p||_1 \qquad (4)$$

According to the convex objective function shown in Equation (4), the mapping matrix $A$ may be optimized over an $-\ell_1$-norm, which indicates a distance between the noisy data distributions and the noiseless data distribution. In these and other embodiments, the mapping matrix $A$ that minimizes the convex objective function in Equation (4) may be identified using a convex optimization solver, such as CVXOPT for PYTHON, YALMIP for MATLAB, CSDP for C, etc., according to any convex optimization algorithms, such as bundle methods, subgradient-projection methods, interior-point methods, cutting-plane methods, etc.

The second quantum circuit 140 may be configured to output the second data distribution 145 with an associated noise level. In some embodiments, the second quantum circuit 140 may receive the error mitigation parameter 135 from the data distribution analysis module 130. The second quantum circuit 140 may be configured to apply the error mitigation parameter 135 to the second data distribution 145 and reduce the noise level associated with the outputted data distribution. In some situations, the error mitigation parameter 135 may or may not be specifically tailored to the second quantum circuit 140. However, the error mitigation parameter 135 may still be applicable to the second quantum circuit 140 because the error mitigation parameter 135 may be determined in relation to a quantum circuit having a circuitry depth similar to the circuitry depth of the second quantum circuit 140.

In these and other embodiments, the second quantum circuit 140 may be the same as or similar to the first quantum circuit 110 such that the second data distribution 145 may be the same or similar to the first data distributions 115 for the same input before the noise level of the second data distribution 145 is reduced. As such, application of the error mitigation parameter 135 to the second data distribution 145 may be the same as or similar to reducing the noise level of the first data distributions 115 outputted by the first quantum circuit 110.

Modifications, additions, or omissions may be made to the system 100 without departing from the scope of the disclosure. For example, the designations of different elements in the manner described is meant to help explain concepts described herein and is not limiting. For instance, in some embodiments, the first quantum circuit 110, the simulated classical circuit 120, the data distribution analysis module 130, and the second quantum circuit 140 are delineated in the specific manner described to help with explaining concepts described herein but such delineation is not meant to be limiting. Further, the system 100 may include any number of other elements or may be implemented within other systems or contexts than those described.

Figure 3 is a flowchart of an example method 300 of determining and applying the error mitigation parameter to a data distribution according to the present disclosure. The method 300 may be performed by any suitable system, apparatus, or device. For example, the first quantum circuit 110, the simulated classical circuit 120, the data distribution analysis module 130, and/or the second quantum circuit 140 may perform one or more of the operations associated with the method 300. Although illustrated with discrete blocks, the steps and operations associated with one or more of the blocks of the method 300 may be divided into additional blocks, combined into fewer blocks, or eliminated, depending on the particular implementation.

The method 300 may begin at operations 310, where one or more first data distributions may be obtained by running the first quantum circuit at different noise levels. The first quantum circuit may obtain a first input and output a corresponding first data distribution including a first noise level. In some embodiments, the noise level of the first quantum circuit may be increased and/or decreased by inserting and/or removing the above-noted gates, respectively, as described above in relation to Figure 2. After adjusting the noise level of the first quantum circuit, the first quantum circuit may output the same first data distribution corresponding to the first input at a second noise level.

At operations 320, a classical circuit corresponding to the first quantum circuit may be simulated, and at operations 330, a noiseless data distribution may be obtained by running the simulated classical circuit. At operations 340, an error mitigation parameter may be determined based on a comparison between the first data distributions and the noiseless data distribution as described above in relation to Figure 1.

At operations 350, the error mitigation parameter may be applied to one or more second data distributions to reduce the noise associated with each of the second data distributions. In some embodiments, the second data distributions may be output by a second quantum circuit having a similar circuitry depth as the first quantum circuit such that the error mitigation parameter determined in relation to the first data distributions outputted by the first quantum circuit is suitable for removing noise included in the second data distributions. Additionally or alternatively, each of the second data distributions may be outputted based on an input the same as or different from the input obtained by the first quantum circuit that corresponds to the outputted first data distributions. In some embodiments, the second data distributions may be output by a second quantum circuit that is the same as or similar to the first quantum circuit such that the error mitigation parameter determined in relation to the first data distributions is highly relevant and applicable to removing noise included in the second data distributions.

Modifications, additions, or omissions may be made to the method 300 without departing from the scope of the disclosure. For example, the designations of different elements in the manner described is meant to help explain concepts described herein and is not limiting. Further, the method 300 may include any number of other elements or may be implemented within other systems or contexts than those described.

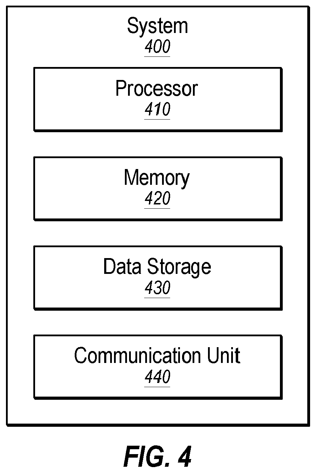

Figure 4 illustrates an example computing system 400, according to at least one embodiment described in the present disclosure. The computing system 400 may include a processor 410, a memory 420, a data storage 430, and/or a communication unit 440, which all may be communicatively coupled. Any or all of the system 100 of Figure 1 may be implemented as a computing system consistent with the computing system 400, including the first quantum circuit 110, the simulated classical circuit 120, the data distribution analysis module 130, and/or the second quantum circuit 140.

Generally, the processor 410 may include any suitable special-purpose or general-purpose computer, computing entity, or processing device including various computer hardware or software modules and may be configured to execute instructions stored on any applicable computer-readable storage media. For example, the processor 410 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in Figure 4, it is understood that the processor 410 may include any number of processors distributed across any number of network or physical locations that are configured to perform individually or collectively any number of operations described in the present disclosure. In some embodiments, the processor 410 may interpret and/or execute program instructions and/or process data stored in the memory 420, the data storage 430, or the memory 420 and the data storage 430. In some embodiments, the processor 410 may fetch program instructions from the data storage 430 and load the program instructions into the memory 420.

After the program instructions are loaded into the memory 420, the processor 410 may execute the program instructions, such as instructions to perform the method 300 of Figure 3. For example, the processor 410 may obtain the first data distributions, simulate a classical circuit corresponding to the first quantum circuit, obtain the noiseless data distribution, determine the error mitigation parameter, and/or apply the error mitigation parameter to the second data distribution.

The memory 420 and the data storage 430 may include computer-readable storage media or one or more computer-readable storage mediums for carrying or having computer-executable instructions or data structures stored thereon. Such computer-readable storage media may be any available media that may be accessed by a general-purpose or special-purpose computer, such as the processor 410. For example, the memory 420 and/or the data storage 430 may store the first data distributions 115, the noiseless data distribution 125, the error mitigation parameter 135, and/or the second data distribution 145. In some embodiments, the computing system 400 may or may not include either of the memory 420 and the data storage 430.

By way of example, and not limitation, such computer-readable storage media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to store desired program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 410 to perform a certain operation or group of operations.

The communication unit 440 may include any component, device, system, or combination thereof that is configured to transmit or receive information over a network. In some embodiments, the communication unit 440 may communicate with other devices at other locations, the same location, or even other components within the same system. For example, the communication unit 440 may include a modem, a network card (wireless or wired), an optical communication device, an infrared communication device, a wireless communication device (such as an antenna), and/or chipset (such as a Bluetooth device, an 802.6 device (e.g., Metropolitan Area Network (MAN)), a WiFi device, a WiMax device, cellular communication facilities, or others), and/or the like. The communication unit 440 may permit data to be exchanged with a network and/or any other devices or systems described in the present disclosure. For example, the communication unit 440 may allow the system 400 to communicate with other systems, such as computing devices and/or other networks.

One skilled in the art, after reviewing this disclosure, may recognize that modifications, additions, or omissions may be made to the system 400 without departing from the scope of the present disclosure. For example, the system 400 may include more or fewer components than those explicitly illustrated and described.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, it may be recognized that changes may be made in form and detail without departing from the scope of the present disclosure. Thus, the present disclosure is limited only by the claims.

In some embodiments, the different components, modules, engines, and services described herein may be implemented as objects or processes that execute on a computing system (e.g., as separate threads). While some of the systems and processes described herein are generally described as being implemented in software (stored on and/or executed by general purpose hardware), specific hardware implementations or a combination of software and specific hardware implementations are also possible and contemplated.

Terms used in the present disclosure and especially in the appended claims (e.g., bodies of the appended claims) are generally intended as "open terms" (e.g., the term "including" should be interpreted as "including, but not limited to.").

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is expressly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase preceding two or more alternative terms, whether in the description, claims, or drawings, should be understood to contemplate the possibilities of including one of the terms, either of the terms, or both of the terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

**Claims**

1. A method, comprising:

   obtaining a plurality of first data distributions in which each first data distribution corresponds to running a first quantum circuit using a first input at a different noise level of a plurality of noise levels;
   simulating the first quantum circuit as a classical circuit;
   running the classical circuit using the first input;
   obtaining a noiseless data distribution corresponding to running the classical circuit using the first input;
   determining an error mitigation parameter by performing a data regression analysis between the noiseless data distribution and the plurality of first data distributions;
   obtaining a second data distribution that corresponds to running a second quantum circuit using a second input; and
   obtaining a modified second data distribution by applying the error mitigation parameter to the second data distribution such that at least some noise included in the second data distribution is removed.

2. The method of claim 1, wherein:

   the first quantum circuit includes one or more single-qubit gates and one or more two-qubit gates; and
   a depth of the first quantum circuit, determined according to a number of single-qubit gates and a number of two-qubit gates included in the first quantum circuit, is selected to be within a threshold depth of the second quantum circuit.

3. The method of claim 1, wherein the first quantum circuit and the second quantum circuit are the same quantum circuit.

4. The method of claim 1, wherein running the first quantum circuit using the first input at the different noise levels of the plurality of noise levels includes adjusting the noise level by adding an identity operation into the first quantum circuit.

5. The method of claim 4, wherein adding the identity operation into the first quantum circuit comprises adding one or more pairs of reversible gates in which each of the pairs of reversible gates includes at least one of: CNOT gates, Hadamard gates, or S gates.

6. The method of claim 1, wherein determining the error mitigation parameter includes performing a linear regression operation using a row stochastic matrix "A" to relate the first data distributions to the noiseless data distribution.

7. The method of claim 6, wherein performing the linear regression operation comprises:

   determining a product between the row stochastic matrix "A" and each of the data distributions;
   determining a difference between each of the products and the noiseless data distribution; and

adjusting a value of the row stochastic matrix "A" to minimize a sum of the differences.

8. One or more non-transitory computer-readable storage media configured to store instructions that, in response to being executed, cause a system to perform operations, the operations comprising:

obtaining a plurality of first data distributions in which each data distribution corresponds to running a first quantum circuit using a first input at a different noise level of a plurality of noise levels;
simulating the first quantum circuit as a classical circuit;
running the classical circuit using the first input;
obtaining a noiseless data distribution corresponding to running the classical circuit using the first input;
determining an error mitigation parameter by performing a data regression analysis between the noiseless data distribution and the plurality of first data distributions;
obtaining a second data distribution that corresponds to running a second quantum circuit using a second input; and
obtaining a modified second data distribution by applying the error mitigation parameter to the second data distribution such that at least some noise included in the second data distribution is removed.

9. The one or more non-transitory computer-readable storage media of claim 8, wherein:

the first quantum circuit includes one or more single-qubit gates and one or more two-qubit gates; and
a depth of the first quantum circuit, determined according to a number of single-qubit gates and a number of two-qubit gates included in the first quantum circuit, is selected to be within a threshold depth of the second quantum circuit.

10. The one or more non-transitory computer-readable storage media of claim 8, wherein the first quantum circuit and the second quantum circuit are the same quantum circuit.

11. The one or more non-transitory computer-readable storage media of claim 8, wherein running the first quantum circuit using the first input at the different noise levels of the plurality of noise levels includes adjusting the noise level by adding an identity operation into the first quantum circuit.

12. The one or more non-transitory computer-readable storage media of claim 11, wherein adding the identity operation into the first quantum circuit comprises adding one or more pairs of reversible gates in which each of the pairs of reversible gates includes at least one of: CNOT gates, Hadamard gates, or S gates.

13. The one or more non-transitory computer-readable storage media of claim 8, wherein determining the error mitigation parameter includes performing a linear regression operation using a row stochastic matrix "A" to relate the first data distributions to the noiseless data distribution.

14. The one or more non-transitory computer-readable storage media of claim 13, wherein performing the linear regression operation comprises:

determining a product between the row stochastic matrix "A" and each of the data distributions;
determining a difference between each of the products and the noiseless data distribution; and
adjusting a value of the row stochastic matrix "A" to minimize a sum of the differences.

15. A system comprising:

one or more processors; and
one or more non-transitory computer-readable storage media configured to store instructions that, in response to being executed, cause the system to perform operations, the operations comprising:

obtaining a plurality of first data distributions in which each data distribution corresponds to running a first quantum circuit using a first input at a different noise level of a plurality of noise levels;
simulating the first quantum circuit as a classical circuit;
running the classical circuit using the first input;
obtaining a noiseless data distribution corresponding to running the classical circuit using the first input;
determining an error mitigation parameter by performing a data regression analysis between the noiseless data distribution and the plurality of first data distributions;
obtaining a second data distribution that corresponds to running a second quantum circuit using a second input; and
obtaining a modified second data distribution by applying the error mitigation parameter to the second data distribution such that at least some noise included in the second data distribution is removed.

16. The system of claim 15, wherein:

the first quantum circuit includes one or more single-qubit gates and one or more two-qubit gates; and
a depth of the first quantum circuit, determined according to a number of single-qubit gates and a number of two-qubit gates included in the first quantum circuit, is selected to be within a threshold depth of the second quantum circuit.

17. The system of claim 15, wherein the first quantum circuit and the second quantum circuit are the same quantum circuit.

18. The system of claim 15, wherein running the first quantum circuit using the first input at the different noise levels of the plurality of noise levels includes adjusting the noise level by adding an identity operation into the first quantum circuit, wherein adding the identity operation into the first quantum circuit comprises adding one or more pairs of reversible gates in which each of the pairs of reversible gates includes at least one of: CNOT gates, Hadamard gates, or S gates.

19. The system of claim 15, wherein determining the error mitigation parameter includes performing a linear regression operation using a row stochastic matrix "A" to relate the first data distributions to the noiseless data distribution.

20. The system of claim 19, wherein performing the linear regression operation comprises:

determining a product between the row stochastic matrix "A" and each of the data distributions;
determining a difference between each of the products and the noiseless data distribution; and
adjusting a value of the row stochastic matrix "A" to minimize a sum of the differences.

100

First
Quantum Circuit
110

Simulated
Classical Circuit
120

First Data
Distributions
115

Data Distribution
Analysis Module
130

Noiseless Data
Distribution
125

Error Mitigation
Parameter
135

Simulated
Classical Circuit
120

Second Data
Distributions
145

*FIG. 1*

**FIG. 2**

_300_

Obtain First Data Distributions By Running First Quantum Circuit At Different Noise Levels _310_

Simulate A Classical Circuit Corresponding To The First Quantum Circuit _320_

Obtain A Noiseless Data Distribution By Running The Classical Circuit _330_

Determine An Error Mitigation Parameter _340_

Apply The Error Mitigation Parameter To A Second Data Distribution _350_

*FIG. 3*

System
*400*

Processor
*410*

Memory
*420*

Data Storage
*430*

Communication Unit
*440*

*FIG. 4*

**EP 4 141 751 A1**

Europäisches Patentamt
European Patent Office
Office européen des brevets

# EUROPEAN SEARCH REPORT

Application Number

EP 22 18 6921

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RYAN LAROSE ET AL: "Mitiq: A software package for error mitigation on noisy quantum computers", ARXIV.ORG, CORNELL UNIVERSITY LIBRARY, 201 OLIN LIBRARY CORNELL UNIVERSITY ITHACA, NY 14853, 12 August 2021 (2021-08-12), XP091021222, * abstract; figures 1, 2, 7, 8 * * page 10, column 2, line 15 - page 13, column 1, line 6 * * page 18, column 1, line 31 - column 2, line 33 * | 1,8,15 | INV. G06N10/20 G06N10/70 |
| A | ARMANDS STRIKIS ET AL: "Learning-based quantum error mitigation", ARXIV.ORG, CORNELL UNIVERSITY LIBRARY, 201 OLIN LIBRARY CORNELL UNIVERSITY ITHACA, NY 14853, 22 March 2021 (2021-03-22), XP081895973, * abstract; figures 1, 4-6 * * page 1, column 1, line 1 - page 3, column 1, line 28 * * page 6, column 1, line 28 - page 9, column 2, line 3 * * page 4, column 1, line 15 - page 5, column 2, line 2 * | 1-20 | |
| A | ANGUS LOWE ET AL: "Unified approach to data-driven quantum error mitigation", ARXIV.ORG, CORNELL UNIVERSITY LIBRARY, 201 OLIN LIBRARY CORNELL UNIVERSITY ITHACA, NY 14853, 2 August 2021 (2021-08-02), XP091021781, DOI: 10.1103/PHYSREVRESEARCH.3.033098 * abstract; figures 1, 2 * * page 1, column 1, line 1 - page 2, column 2, line 7 * * page 3, column 1, line 33 - page 4, column 2, line 5 * | 1-20 | |

TECHNICAL FIELDS SEARCHED (IPC)

G06N

The present search report has been drawn up for all claims

| Place of search | Date of completion of the search | Examiner |
|---|---|---|
| The Hague | 18 January 2023 | Rousset, Antoine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15